# EUROPEAN PATENT APPLICATION

(11) **EP 1 221 817 A1**
(43) Date of publication of application: **10.07.2002**
(21) Application number: 99925488.1
(22) Date of filing: 25.05.1999
(51) Int. Cl.: H04N 13/00

(54) **STEREOSCOPIC SYSTEM**

(71) Applicant: ARSENICH, Svyatoslav Ivanovich, Reutov, Moskovskaya obl., 143952 (RU)
(72) Inventor: ARSENICH, Svyatoslav Ivanovich, Reutov, Moskovskaya obl., 143952 (RU)
(74) Representative: Patentanwälte Zellentin & Partner
(86) International application number: RU9900174
(87) International publication number: WO9965249

(57) **Abstract**

A stereoscopic projection system comprises stereo-projectors with projection lenses for projecting the left and right picture of stereopair images onto a lenticular raster screen. The lenticular raster of the visualisation screen separates and focuses the images on corresponding vision areas of the left pictures for the left eyes and the right pictures for the right eyes of the spectators. The projectors include a beam-splitting system for forming a plurality of separate stereo-projections using a plurality of distinct optical systems wherein each of the optical systems includes two pairs of projection lenses for providing an individual stereo-projection to be viewed by a given spectator. The stereoscopic system further includes an automatic corrector connected to a sensor for monitoring the location coordinates of the eyes of each spectator. The automatic corrector comprises a lens actuator that performs an optical dynamic registration between the projections of the left and right stereopair images which are focused by the screen, and the predetermined vision areas of the stereoscopic images for the left and the right eyes of the spectators, respectively.

## Description

### Field of the Invention

The present invention relates to stereoscopic systems for demonstrating stereoscopic images which enable viewing of the stereoscopic effect without viewing glasses.

The invention is preferably applicable in stereoscopic motion pictures, stereoscopic television and computers.

The invention is also useful for demonstration of stereoscopic information at exhibitions, in museums, concert and sport centers, stadiums and athletic fields, in video advertisements, cars, game and training systems, etc.

### Background of the Invention

Systems which form stereoscopic images for separately viewing, through polarized or shutter viewing glasses, the left and right stereopair pictures by the left and right eye of a spectator, respectively, are widely known (see book by Valyus N.A entitled "Stereoscopy: Photography, Cinematography, Television".- Moscow, Iskusstvo Publishers, 1986, 263 pages, il.).

Owing to use of the polarized or shutter stereoscopic viewing glasses, the eyes of spectators perceive equal light load, and a great number of spectators can simultaneously observe a full-colored stereoscopic image within a wide angle of vision.

The main problem with the polarization method is the necessity to use a great light flux for film projection on a large screen because up to 70% of the light flux is absorbed by polarization light filters.

The basic disadvantage of the shutter method is that it causes tiredness of the eyes due to low-frequency flickering of images, which may lead to irritation and even disease of eyes when stereoscopic images are being viewed for a long time. To make the flickering imperceptible, up to 83 frames must change every second.

Generally, in the systems using viewing glasses a viewer experiences discomfort when viewing stereoscopic images through stereoscopic glasses, this resulting in various unfavorable physiological effects, irritation and tiredness of vision.

Simultaneous continuous optical correction (of optical parameters) of each stereoscopic image or simultaneous separate demonstration of different stereoscopic images to several spectators is infeasible. The reason is that a common stereopair image is formed on a general stereoscopic screen so that to be viewed by all of the spectators at the same time.

Widely known are stereoscopic projection systems with high-aperture lenticular stereoscopic screens, in which no viewing glasses are used. The systems comprise a stereo-projector for projecting the combined left and right picture of the stereopair at different angles onto a stereoscreen. A lenticular raster provides an automatic stereoscopic presentation of the image on the stereoscreen (as an auto-stereogram which is registered in the screen plane and consists from vertical parallel or radial strips). The lenticular raster is mounted in front of the auto-stereogram for viewing stereoscopic images.

The images on the screen are focused by the lenticular raster to a viewing room at regions of selectively viewing the left and right images by the left and right eyes of spectators, respectively.

The lenticular raster stereoscopy provides the best quality of the viewed stereoscopic image, while observation of stereoscopic images without viewing glasses is more comfortable for eyes than through viewing glasses. The stereoscopic images are formed on the plane of a video monitor or a stereoscreen as a stereogram (stereopair) consisting of two parallax-mated left and right images (pictures of the same object) in the form of two central projections with descent centers, separated by a lateral baseline. In the stereoscopic projection systems the left and right stereopair pictures are projected by two projectors at different angles (in the horizontal plane) of axes of projection onto an external visualization lenticular raster screen of a translucent (rear-projection) or reflecting (front-projection) type. The projected left and right pictures of the stereopair image are registered in the screen plane as an auto-stereogram with the aid of the lenticular raster formed by vertical cylinder lenses (with parallel or radially-convergent long axes). Auto-stereograms (parallax stereograms) represent a registered stereogram in which the right and left registered images of the stereopair are split up into narrow vertical strips. These strips are interlaced so that to alternate in succession. The number of lenses on the screen raster must be the same as the number of strip pairs. The right stereopair strips (of the left picture) are projected by lenses to the spectator's left eye (to view the left image), while the left strips (of the right picture) are projected by the same lenses to the right eye (to view the right image).

Problems with such lenticular raster stereoscopic systems include low optical efficiency of the lenticular raster and nonuniform brightness of viewed images when the viewer's eyes shift from the centers of stereo aspects of the viewed stereoscopic image. The viewer experiences discomfort caused by tiresome motionless holding of the head in selective vision areas, while the stereoscopic image appears to be far from ideal. This is explained by the fact that a width of each vision area must be smaller than the size of the eyes basis (distance between eye pupils), while a two or more centimeter displacement of eyes relative to the centers of these areas causes essential reduction in brightness of the image viewed. If the viewer changes position or leaves these areas, the stereoscopic effect is lost. The strict fixation of the viewer's position relative to the vision areas even for several minutes causes discomfort: uneasiness, fast tiredness, because the viewer is compelled to sit motionless and continuously seek the best visual aspect (center of the vision area) for clear vision of the stereoscopic effect.

Known are stereoscopic systems for producing multi-aspect raster image in the form of aspectgrams comprising a mosaic of unit elements of stereopair images which differ both in horizontal and vertical parallax, corresponding to successive points of vision at the object along the common base line. Every unit image of the aspectgram is produced by central projection from a discrete set of projection centers located in the plane in front of the lens.

The presence of multiple stereopairs provides more comfortable viewing of the stereoscopic image with the aid of lenticular rasters, and ability of viewing the raster stereoscopic images from different positions of appropriate vision aspects at lateral displacement of spectators. The screen of an unharmonic type (with spherical lenses) provides the possibility of comfortable viewing of the aspectgram image from any aspects (vision points at displacement and free lateral motion of spectators within the vision sector) and when the spectator approaches the stereoscopic image. The screen further exhibits the increased optical power as compared with the raster screens having a linear structure of lens arrangement.

The basic disadvantage of aspectgrams at shooting and replication of films is the necessity of recording redundant information (for shooting and reproducing stereoscopic images with plurality of stereo aspects) on a carrier (photographic film, reproduction). This results in technical and economical problems encountered in recording, replication and viewing of high quality and high resolution multiple-aspect images free of geometric errors.

Main drawback of all conventional stereoscopic screens with a lenticular raster is the impossibility of demonstrating the stereoscopic images within a wide field of view since the screen cannot be made sufficiently wide and/or with a curved surface, while the useful selective vision area is extremely small. For spectators sitting near the end of the screen, the depth of stereoscopic images is distorted from the proximal end towards the distal end of the screen. Restriction of the space of stereoscopic effect clear vision to a small number (up to 10) of predetermined aspects (narrow vision areas) gives rise to vision discomfort.

In all of the conventional stereoscopic systems, either with or without viewing glasses, only a small number of spectators located just in the center of the viewing room can see the high definition central projection free of geometrical error at maximum resolution and wide field of view. This is dictated by formation of a single common stereopair image or a multiple-aspect image of one object on a common stereoscreen. Therefore, it is impossible to provide correction of optical distortions in stereoscopic images and optimal dynamic registration of selective vision areas of the stereoscopic images individually for every spectator, as well as to provide simultaneous collective observation of motion pictures or video programs with different contents on a common screen.

Known in the art are projection stereoscopic systems with a lenticular screen in the form of a single large lens. The stereoscopic systems comprise one or more stereo-projectors for simultaneously projecting several stereopair images from different projection aspects and viewing every projection by a given spectator at the same time. Having passed through the lenticular stereoscreen, the rays are focused and collected into convergent beams which draw images of output pupils of all projection lenses in space in front of the stereoscreen (in vision areas of stereoscopic images). Spectators may view the stereoscopic images from different stereo aspects at the same time.

The merits of this system include simple design of the stereoscreen and optimal brightness of the viewed stereopair images when spectator displaces relative to the centers of stereoscopic vision aspects.

A problem with this system is the reduction in the angle of view in proportion to the inclination of the projection axis to the plane of stereoscreen, and geometrical error in the stereoscopic picture when it is viewed at an angle to the central optical axis of the stereoscreen lens.

Most closely approaching the present invention by the achieved technical result is a stereoscopic system with a mirror spherical projection stereoscreen in the form of large concave spherical or parabolic mirror. The stereoscopic system comprises one or more stereo-projectors for simultaneously projecting several stereopair images from different projection aspects and simultaneously viewing each projection by a given spectator. Different stereo-projectors may simultaneously project the same or different stereoscopic images. The beams reflected from the mirror-spherical stereoscreen are focused and collected to convergent beams which draw images of output pupils of all projection lenses in space in front of the stereoscreen (in vision areas of stereoscopic images). Images of the lens pupils for projecting the left images must be located in points in space where the left eyes of spectators are located, while images of the lens pupils for projecting the right images must be located, respectively, in points in space where the right eyes are located. To make the stereo-projector design simpler, the beam of rays at the output of each projection lens is split into several beams by light-splitting systems. Every separate beam of rays will draw, on the mirror-spherical stereoscreen, the complete image of its part of the stereogram, while the projection center of the beam will be shifted relative to the projection center of the other beams. In front of the screen in the auditorium region every beam will be collected separately from the other beams, i.e. it will be focused by the screen on a separate area for viewing one, left or right, image of the stereopair by a given spectator. The light-splitting systems may be semi-transparent mirrors, multiplying prisms and other optical systems. A number of split stereo-projection pairs should be equal to the number of stereoscopic image vision aspects viewed by the respective number of spectators.

The benefit of the stereoscopic projections through a lenticular screen or on a concave mirror is that they reduce visual fatigue caused by the fact that such stereoscopic projections adjust the spectator's accommodation efforts and eye convergence state (convergence of eye axes). The stereoscopic screens exhibit maximum optical power and provide optimal optical parameters of the viewed stereoscopic images with ability of optical correction of optical parameters of each stereopair image.

A basic problem with the mirror spherical stereoscreen is the strict fixation of the spectator's position relative to the vision areas, which results in discomfort and fast tiredness even after few minutes since every spectator must be sitting motionless and constantly seeking the best aspect (center of the vision area) so that to clearly see the stereoscopic effect.

### Summary of the Invention

It is a primary object of the present invention to provide a .stereoscopic system for comfortably viewing, without viewing glasses, a stereoscopic image on conventional, wide-format and panoramic visualization screens, which allows the stereoscopic effect to be seen from any angle at displacement of spectators.

The main technical result provided by practicing the invention is that a stereo-projection system ensures dynamic optical registration of each predetermined vision area of projection of the left stereopair image with the left eye of a given spectator, and a vision area of the right stereopair image with the right eye of the spectator. To provide visual comfort for the spectators, such registrations of vision areas are performed by the system continuously, simultaneously and independently for every spectator without regard to free position and displacement of the spectators at any point of the stereoscopic image viewing sector.

The above technical result is attained in a stereoscopic system for viewing stereogram images without viewing glasses, comprising an apparatus with a visualization stereoscreen for forming separately localized screen images of stereopairs. The stereoscopic system comprises, on the stereoscreen, a system for optically separating the left or right screen image of each predetermined stereopair, respectively, to a single stereo aspect for viewing by the left or right eye, respectively, of one given spectator. The combination of technical features which distinguish the claimed system from the most pertinent prior art comprises the apparatus for forming stereoscopic images made as a stereo-projection system with a lenticular raster stereoscreen, or a cat's-eye screen, or a concave spherical or parabolic stereoscreen. The projection system comprises a number of stereo-projectors equal to a number of spectators so that to form a number of stereopairs equal to the number of spectators. Projection lenses of each stereo-projector are adapted to be displaced in parallel with the stereoscreen. The lenses are located in space so that the screen image of one stereopair projected by lenses of each stereo-projector is focused by the stereoscreen to an aspect for viewing the stereoscopic image by one predetermined spectator. The stereo-projection system comprises an automatic corrector with actuators which are connected separately to each pair of projection lenses of the stereo-projectors for separately displacing the lenses in parallel with the stereoscreen in the direction of registration of one predetermined stereo aspect with respective eyes of a predetermined spectator. To this end, the system comprises a sensor for separate determination of the location coordinates of the eyes of each spectator relative to the stereo aspect for viewing the stereopair screen image by this spectator. The sensor is connected to the automatic corrector and adapted to generate control signals which are provided to the automatic corrector.

In accordance with claim 2, the stereoscopic system as set forth in claim 1 is characterized by a design of the lenticular raster stereoscreen. The screen is a translucent screen with three parallel layers of lenticular rasters, each raster layer being formed by spherical lenses. All lenses in the raster layers are located so that every three positive lenses, one from each raster layer, are on a common optical axis, as in the structure of a straight-drawing lens with the linear magnification ratio equal to unity. All output pupils of pairs of the projection lenses are set for through-projection behind the stereoscreen in a common plane which is parallel to the plane of stereoscreen and spaced from the screen so that to provide sharp focusing by the stereoscreen of every stereopair screen image to points of stereo aspects for clearly viewing the stereoscopic effect by every spectator. The spectator's eyes must be also located in the plane of these stereo aspects, that is at a distance from the screen equal to the distance from the screen to the plane of output pupils of pairs of projection lenses. For magnifying the projection of a single stereoscopic image (viewed by a given spectator) on the stereoscreen, each pair of the projection lenses is connected to a separate actuator for separate automatic correction of these pair of lenses independently from the other pairs of the lenses. To provide simultaneous viewing of different stereoscopic images, the projection system may comprise two or more separate stereo-projectors for simultaneous parallel projecting of different full-screen stereoscopic images on the common stereoscreen.

This embodiment of the stereoscopic system provides the possibility of simultaneous comfortable viewing (without stereo glasses) of different stereoscopic images on a common visualization screen by different spectators from corresponding vision areas. A number of spectators (at any position or displacement of the spectators within the sector of stereoscopic image projection) may amount to more than thousand people. The lenticular raster screen, providing central projection by each pair of stereo-projectors (every projection axis is directed perpendicular to the stereoscreen plane), allows the stereoscopic images to be viewed within a wide angle of view up to 90° with the same optical parameters, to ensure visual comfort to all spectators irrespective of their position in the vision sector.

In accordance with claim 3, the stereoscopic system is characterized in that the stereoscreen is a mirror lenticular raster screen of cat's-eye type comprised of cat's-eyes in the form of spherical microlenses having a mirror coating at the rear side. In another embodiment, the cat's-eye stereoscreen comprises a raster made by corner mirror reflectors. In any embodiment of the stereoscopic system with a cat's-eye stereoscreen, every pair of projection lenses (for magnifying projections on the stereoscreen) is located closer to the head of a predetermined spectator. These lenses are directed at the stereoscreen for reflecting, by the stereoscreen, the right stereopair image projected by the lens at the right side of the head to the right eye of this spectator, and the left stereopair image projected by the lens at the left side of the head to the left eye of the spectator. For simultaneously viewing different stereoscopic images on the common screen by a great number of spectators, each individual pair of projection lenses is similarly arranged relative to the stereoscreen and the head of its spectator.

This embodiment of the stereoscopic system provides the possibility of simultaneous comfortable viewing (without stereo glasses) of different stereoscopic images on a common screen by different spectators from respective vision areas at different distances from the stereoscreen. A number of spectators (at any position and displacement of the spectators within the sector of projection of these stereoscopic images) may also amount to more than thousand people. Stereoscopic screens with cat's-eye microlenses may allow the observation of stereoscopic images within wide and even panoramic angles of view up to 90°. The automatic corrector for registering selective vision areas of the left and right stereopair images with respective eyes of the spectators may provide comfortable viewing of the stereoscopic effect at any displacement of the spectator's head (back and forth, leftward and rightward, up and down) within the vision sector of stereoscopic images, the lens pairs being appropriately displaced through the automatic correction.

In accordance with claim 4, the stereoscopic system is characterized in that the stereoscreen for reflecting a projection is a spherical or parabolic concave mirror with the center of radius of curvature located at the side of a spectator. Each given projection lens is continuously shifted by the automatic corrector to a point in space which symmetrical to the respective eye of the spectator. The axis of this symmetry is the radius of curvature of the screen mirror. In this event, the output pupil of the lens, the spectator's eye and the axis of symmetry along the radius of curvature of the mirror are in the same plane of symmetry.

This embodiment of the stereoscopic system provides a simple design of the stereoscreen and absence of light flares on the screen at any spurious illumination of the stereoscreen beyond the output pupil of any projection lens. Therefore, the system is useful for demonstration of stereoscopic images at any external spurious illumination of the stereoscreen.

In accordance with claim 5, the stereoscopic system as set forth in any one of claims 1 to 4 is characterized in that the stereo-projector comprises a pair of stationary projection telelenses (one telelens for projecting the left image, and the other for projecting the right image) with a light-splitting system made by mirror or prism elements. The light-splitting system is arranged after the telelenses for splitting beams projected from output pupils of these telelenses and directing the beams to input pupils of wide-angle or normal mobile projection lenses for magnifying and shifting stereopair projections on the stereoscreen. The light-splitting elements and the mobile projection lenses for magnifying the images on the screen are connected to an actuator of the automatic corrector for separately displacing the lenses in parallel with the plane of the stereoscreen so that to register predetermined stereo aspects with the eyes of respective spectators.

This embodiment of the stereoscopic system provides a simple design of the stereo-projection system for forming a plurality of stereopairs viewed simultaneously by a plurality of spectators at a common stereoscreen. This simplification is provided owing to the replacement of a plurality of sophisticated stereo-projectors by the simpler system of projection lenses with a light-splitting system and automatic correction actuators.

In accordance with claim 6, the stereoscopic system is characterized in that the apparatus for generating stereoscopic images is a monitor with a lenticular raster stereoscreen for forming several auto-stereograms of stereopair images. To form a great number of stereopairs clearly seen by a large number of spectators, the raster must be regular and comprise spherical lenses. In one embodiment of the monitor with a lenticular raster stereoscreen, elements of the image formed on a transmission-type screen of the monitor are directionally illuminated. In another embodiment of the monitor, the lenticular raster of the stereoscreen comprises single-lens raster cells optically isolated from each other. In both embodiments of the monitor, every light beam from an element of the left screen image of one stereopair is focused on one vision area for the left eye of a given spectator, while an element of the right image of the same stereopair is focused, respectively, on the vision area for the right eye of the same spectator. Another stereopair is similarly focused by lenses of another raster for viewing by another spectator from another stereo aspect. To provide simultaneous, continuous, automatic and independent registration of each raster with the screen stereopair image focused by this raster, the monitor is provided with an automatic corrector for displacing images of the stereogram stereopairs relative to the raster lenses. To this end, the system comprises a sensor for separately determining the spatial location coordinates of the eyes of each spectator. The sensor in connected to the automatic corrector and adapted to generate control signals which are provided to the automatic corrector for simultaneously and separately, shifting these elements of auto-stereogram images on the stereoscreen in parallel with the lenticular raster so that each stereoscopic raster of the viewed stereoscopic image be optically registered by the lenticular raster with the eyes of a given spectator at his displacement.

This embodiment of the stereoscopic system provides the continuously clear vision of the stereoscopic effect by every spectator and maximum optical power of lenticular raster screen. There is no optical interference for spectators at the automatic correction (mutual displacement on the screen of different screen stereopair images) for registering stereo aspects of different stereopairs with the eyes of appropriate spectators. Every spectator can see, on the common screen of the monitor, a full-screen stereoscopic image with individual contents, while the other spectators are simultaneously viewing another stereo images.

In accordance with claim 7, the stereoscopic system comprises an apparatus with a visualization stereoscreen. In one embodiment of the system, the apparatus for forming stereoscopic images is a monitor with a lenticular raster screen. In another embodiment, the system is a stereo-projection system with a lenticular raster stereoscreen. In both embodiments, the system is adapted to form images of one or simultaneously several stereopairs (located separately like auto-stereogram stereopairs in the form of a parallaxgram), the images being fixed on the stereoscreen. The lenticular raster is movable along the stereoscreen plane for automatically registering the stereo aspect with the spectator's eyes with the aid of the automatic corrector. In the case of several spectators, a number of stereopairs formed on the screen is equal to the number of spectators. A respective number of movable lenticular rasters is arranged on the stereoscreen. Every lenticular raster focuses, to a predetermined stereo aspect, only one image of the stereopair for viewing it by one given spectator. To this end, the raster may be made and located on the stereoscreen similarly to the design of the stereoscreen as set forth in claim 6. To register the rasters with the screen stereopair images of auto-stereograms, the system comprises an automatic corrector. The automatic corrector comprises actuators connected to each separate lenticular raster. The system comprises a sensor for separately determining the spatial location coordinates of each eye of every spectator. The sensor is connected to the automatic corrector and adapted to generate control signals which are provided to the automatic corrector for simultaneously shifting each such raster along the screen (relative to the screen stereopair images projected by this raster so that each stereo aspect be optically registered with the eyes of the respective spectator).

This system provides constant clear viewing of the stereoscopic effect by every spectator, and maximum optical power of the lenticular raster stereoscreen. There is no optical interference for the spectators at automatic correction (mutual displacement of lenticular rasters on the stereoscreen) for registration of stereo aspects of different stereopairs with the eyes of respective spectators. Every spectator can see, on the common screen of the monitor, a full-screen stereoscopic image with individual contents, while the other spectators are viewing different stereoscopic images.

In accordance with claim 8, the stereoscopic system comprises an apparatus with a visualization screen. The system is characterized in that the apparatus for forming stereoscopic images is a stereo-projection system for forming auto-stereogram images with a lenticular raster stereoscreen and a number of stereo-projectors equal to a number of spectators. Projection lenses of each stereo-projector are located in space so that a screen image of one stereopair projected by lenses of each stereo-projector is focused by the stereoscreen to a stereo aspect to be viewed by one given spectators. In another embodiment, the apparatus for forming stereoscopic images is a monitor with a lenticular raster stereoscreen for forming auto-stereogram images with a number of stereopair images equal to a number of spectators. In both embodiments of the stereoscopic system, chairs for spectators are mounted in the sector for viewing the stereoscopic image, each chair being movable within the area of spectator's displacements and registration of the spectators' eyes with one predetermined stereo aspect. The system comprises an automatic corrector with actuators connected to each chair for independently displacing every chair with the spectator to the position of optimal viewing by the spectator of the stereoscopic effect (to the area of registration of the stereo aspect with the eyes of a spectator). The system comprises a sensor for separately determining the spatial location coordinates of each eye of every spectator. The sensor is connected to the automatic corrector and adapted to generate control signals which are provided to the automatic corrector.

The system provides the possibility of automatic correction at spectator's displacement in the chair in any direction: up and down, leftward and rightward, back and forth, which is more comfortable for viewing wide-screen and panoramic stereoscopic images because stereo aspects can be accurately registered with the eyes of spectators in any direction.

In accordance with claim 9, the stereoscopic system as set forth in any one of claims 1 to 5, 7, and 8 is characterized in that in embodiments with the projection systems for forming stereoscopic images, the projection lenses for magnifying images on the stereoscreen comprise individual correcting optical elements such as curved mirrors or lenses for correcting geometric errors, and/or half-tone, and/or color light filters for adjusting the brightness or chroma over the field of image. In accordance with claim 8, the stereoscopic system as set forth in any one of claims 1 to 4 is characterized in that each pair of the projection magnifying lenses (for forming projections of the left and right stereopair images for one or more spectators) comprises individual correction optical elements. The optical correction elements, such as prisms, cylinder or spherical lenses, are designed for transformation of images, and/or correction of linear magnification of images, elimination of geometrical errors, and/or adjusting angles of view, while gray or color optical filters are provided for adjusting the brightness or chroma over the field of image. The projection lenses are focused with equal angles of magnification so that all spectators can see screen stereoscopic images at different distances with equal definition (the same resolution viewed) and at the same angles of view.

The stereoscopic system ensures complete elimination of geometrical errors, chromatic and brightness aberrations of viewed stereoscopic images for every spectator irrespective of points of projection and viewing.

In accordance with claim 10, the stereoscopic system as set forth in any one of claims 1 to 9 is characterized in that the stereo-projection system is adapted to separately project a screen stereoscopic image in the form of combined left and right pictures of the stereopair only in the central part of the stereoscreen. The projection system simultaneously projects monoscopic images of the left part of the left picture of the stereopair to the left part of the screen, and the right part of the right picture of this stereopair to the right part of the screen.

The stereoscopic system ensures the expanded angle of view of the stereoscopic effect owing to the ability of peripheral vision to perceive greater stereoscopy of the stereoscopic image in the screen center at a greater angle of view, while seeing monoscopic images on the left and right parts of the screen.

### Brief Description of the Drawings

Fig.1 is a plan view of an optical diagram of a projection stereoscopic system with a translucent stereoscreen and movable projection lenses;
Fig.2, is a plan or front view of an optical diagram of a fragment of a translucent lenticular raster stereoscreen,
Fig.3 is a plan view of an optical diagram of stereo-projection on a visualization stereoscreen with a movable lenticular raster,
Fig.4 is a plan view of an optical diagram of stereo-projection on a reflecting mirror lenticular cat's-eye stereoscreen,
Fig.5 is a plan or front view of an optical diagram of a stereoscopic system for projection on a reflecting mirror-spherical stereoscreen,
Figs 6 and 7 are a right side view and a front view, respectively, of an optical diagram of a stereoscopic planar projection system with a translucent stereoscreen.

### Detailed Description of the Embodiments

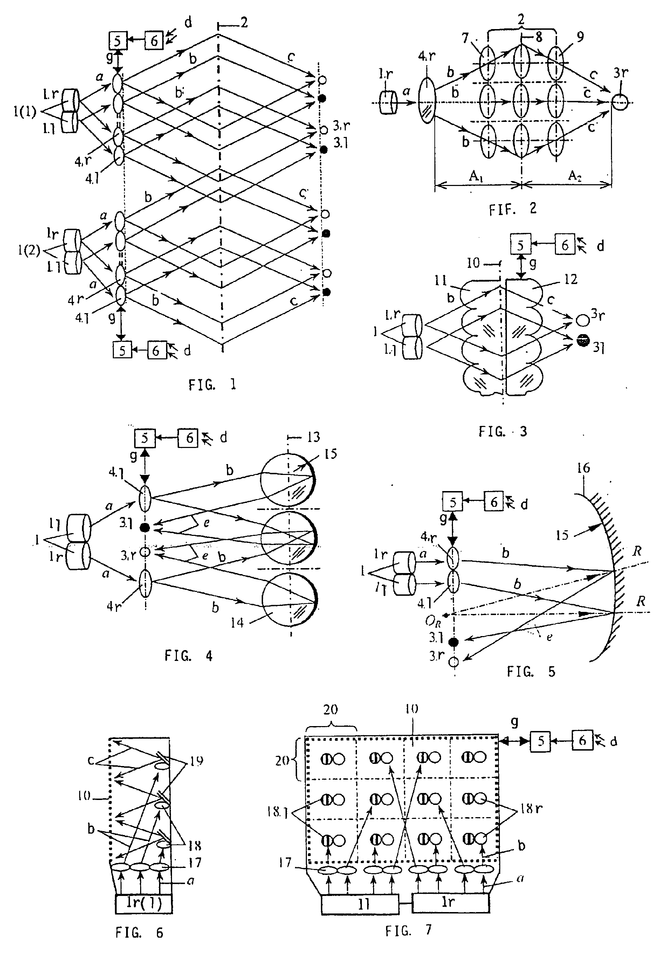

Referring to Fig.1, a stereoscopic system comprises two separate stereo-projectors 1(1) and 1(2) with a projection telelens 1l (to project the left image of a stereopair) and 1r (to project the right image of the stereopair). The system comprises a translucent visualization stereoscreen 2 for simultaneously forming a plurality of magnified screen images of stereopairs and focusing light fluxes of the screen images to corresponding stereo aspects (vision areas 3l, 3r of the left image for the left eye, and the right image for the right eye, respectively) for every given spectator. The stereo-projector optical system is made by optical elements (not shown), such as mirrors or optical prisms, for separating, distributing and shifting in space the light fluxes of stereo-projection from the telelens 1l and 1r to input pupils of magnifying projection lenses 4l (for magnifying the left stereopair image on the stereoscreen 2) and 4r (for magnifying the right stereopair image). The stereoscreen is arranged in parallel with the spatial plane in which all eyes 3r and 3l of the spectators are located and the plane in which the projection lenses 4l and 4r are located. Each of the projection telelenses 1l or 1r is a long-focus lens for projecting through a light-splitting system in direction (a) with the image magnification scale within the area of input aperture of a corresponding projection short-focus (normal or wide-angle) lens 4l or 4r. The lenses 4l or 4r are disposed at different points of projection (separate projection aspects) at the rear side of the stereoscreen for projecting these images in direction (b) with large magnification onto the stereoscreen 2. Lenticular rasters of the stereoscreen 2 are optically oriented for focusing the images projected on the stereoscreen in direction (c) of location of corresponding selective vision areas for viewing the left and right stereopair images by the left and right eye 3l and 3r, respectively. The system comprises an automatic corrector 5 with individual actuators connected to each of the projection lenses 4l or 4r. The automatic corrector system comprises a common sensor 6 or a plurality of separate sensors 6 connected to the automatic corrector 5 for determining, from optical signals (d), the spatial location coordinates of corresponding eyes of the spectators, and subsequently generating control signals for automatic correction in direction (g) of the location coordinates of projection lenses 4l and 4r taking into account dynamic registration of each vision area of the left stereopair images with the left eyes 3l and of the right stereopair image with the right eyes 3r of every spectator. This will enable the permanent viewing of clear stereoscopic effect at displacement of spectators.

Fig.2 shows a fragment (including three lenses in each layer of the stereoscreen) of optical diagram of the translucent lenticular raster stereoscreen 2 of unharmonic type. The screen is made by three layers of lenticular rasters comprising spherical microlenses. Every three lenses 7, 8 and 9, disposed in different raster layers, are optically arranged on a common optical axis in accordance with the optical design of a straight-drawing microlens with the linear magnification ratio equal to unity. Distance A1 from the center of the stereoscreen 2 to the plane in which output lenses of every projection lens 4l or 4r are located, is equal to distance A2 from the center of the stereoscreen to the plane in which the centers of stereoscopic image vision areas 3l and 3r (optimum position of the spectators' eyes) are located.

Referring to Fig.3, a stereoscopic system comprises a stereo-projector oriented to project, on a stereoscreen 10 (a projection system or a monitor) by the lens (1r) of the right stereopair image, and the lens (1l) of the left stereopair image. In this system, the transparent lenticular raster stereoscreen has the central optical plane 10 for forming an auto-stereogram image, and two rasters disposed at the rear and front side of the screen. A raster 11 (at the rear side) serves to form, on the plane 10, images 1l and 1r of the stereopair (stereogram) projected by lenses 1l and 1r to auto-stereogram (with unit images in the form of lines or dots). A front raster 13 is adapted to move in parallel with the plane 10, optically mated with the screen image of auto-stereogram and connected to an actuator of the automatic corrector 5. The automatic corrector is connected to the sensor 6 for determining the spatial location coordinates of the spectators' eyes and generating control signals provided to the automatic corrector for dynamically mating the raster 13 with the auto-stereogram and providing constant viewing of the stereoscopic image with clear stereoscopic effect at spectators' displacement.

Fig.4 shows a stereo-projector 1 with projection telelenses 1l and 1r for projecting the left and right stereopair images, respectively, in directions (a) to appropriate input apertures of projection lenses 4l and 4r. A light-splitting system may be mounted between the lenses 1l and 4l and the lenses 1r and 4r. Every one separate pair of lenses 4l and 4r is made in the form of normal or wide-angle lens systems and disposed closer to the head of a given spectator so that the lens 4r (for projecting the right stereopair image) is disposed at the right side of the head closer to the right eye 3l, while the lens 4l is disposed at the left side of the head closer to the left eye 3l. The lenses 4l and 4r are oriented at the lenticular raster reflecting stereoscreen 13 for projecting in direction (b) with magnification of the stereopair images. The stereoscreen 13 comprises, at the side of spectators, beads of cat's-eye microsphere lenses 14 having a mirror coating 15 at the rear side. Every lens 14 has a rated radius of the lens sphere, radius of the mirror coating 15, and is oriented to the stereoscreen for focusing stereopair images which are projected to the stereoscreen in direction (b) by lenses 4l and 4r (the images being reflected by lens mirrors in direction (e) on vision areas of the left stereopair image for the left eye 3l of a spectator, and the right stereopair image for the right eye 3r). The automatic correction system of all projection lenses for dynamic separate simultaneous registration of the vision areas with the eyes of spectators at displacement of these spectators is similar to the system disclosed in connection with Fig.1.

Fig.5 shows a stereoscopic system comprising a stereo-projector 1 with projection telelenses 1l (for projecting the left stereopair image) and 1l (for projecting the right stereopair image), a light splitting system (not shown), and magnifying normal and wide-angle projection lenses 4l (for projecting the left stereopair image) and 4r (for projecting the right stereopair image). A reflecting mirror spherical stereoscreen 16 comprises a concave spherical mirror 15 (at the side of projection and viewing of stereoscopic image) having the inner radius of curvature R and the center of curvature O_{R}. Output apertures of each projection lens 4l and 4r are located, with the aid of the automatic corrector 5, at predetermined points of projection (projection aspects) symmetrically to coordinates of the vision area centers of the left screen image for the left eye 3l and the right screen image for the right eye 3r of every given spectator, respectively. the axis of symmetry is the axis with center O_{R} of the radius of curvature R of the stereoscreen mirror sphere. The separate dynamic automatic correction system of all projection lenses 4r and 4l for automatically and separately registering the vision areas of screen stereoscopic images with the eyes of spectators at displacement of the spectators is similar to the system described with reference to Fig.1.

Figs 6 and 7 show a planar stereoscopic system which comprises monitors 1l (for forming the left stereopair image) and 1r (for forming the right stereopair image) with two or more projection telelenses 17 and a plurality of wide-angle projection lenses 18 (for magnifying parts of a common stereoscopic image on a translucent lenticular raster stereoscreen 10). The monitors 1r and 1l form light flux of projection in direction (a) towards telelenses 17 disposed at the end of the stereoscreen and oriented to project in direction (b) without magnification of images along the stereoscreen plane to input apertures of lenses 18. Telelenses 17 project local parts of the general area of the left and right images of one or more stereopairs with the general area for full-screen images formed by video monitors 1l or 1r. The lenses 18 are mated with deflecting mirrors 19, located at different points (projection aspects) in the plane parallel to the stereoscreen 10, and oriented to project the image in direction (c) with magnification of the part of the image area on a predetermined localized portion 20 of the area of the translucent stereoscreen 10. The stereoscreen 10 comprises a two-side lenticular raster for forming auto-stereogram stereoscopic images. One or more lenticular rasters are mutually movable in line (g) along the stereoscreen plane, and separately connected to actuators of the automatic corrector 5. The sensor 6 is connected with the automatic corrector 6 and receives signals (d) of the spatial location coordinates of the spectators' eyes. The automatic corrector automatically dynamically registers the stereoscopic image vision areas with the spectators' eyes at displacement of the spectators.

A stereo projection system in accordance with the present invention operates in the following manner.

Referring to Fig.1, the projectors 1(1) and 1(2) project, by all pairs of lenses 1l and 1r with the light-splitting system with lenses 4l and 4r from different aspects, the left and right images of stereopairs which are parallax-mated on the visualization screen 2 as auto-stereograms. The first layer of the stereoscreen (in Figs 1 and 2) forms, at the side of projectors (with the raster of lenses 7) on the central (second) layer of the stereoscreen (with the raster of lenses 8), images in the form of aspectgrams of all images of output apertures of the projection lenses 4l and 4r. The third layer (with the raster of lenses 9) focuses each image of output apertures of the projection lenses to the aspectgram on corresponding vision areas of these images for respective eyes 3l and 3r of spectators. The sensor 6 or a plurality of separate sensors 6 receive light signals (d) of the spatial location coordinates of every eye of the spectator, and generates automatic correction signals which are provided to the automatic corrector 5. On the basis of these signals, the corrector shifts, by separate actuators, every definite pair of projection lenses 4l and 4r in the direction (g) in parallel to the path of displacement of the eyes of a corresponding spectator, thereby providing independent dynamic registration of each particular vision area with the respective eye of the spectator. The automatic correction ensures constant viewing, by any spectator, of clear stereoscopic effect at any point of location of the spectators' eyes or in the process of lateral displacement of the spectators independently of one another.

The stereo-projection system shown in Fig.3 projects, by the stereo monitor 1 with projection lenses 1l and 1r, the left and right mated images of the stereogram on the lenticular raster 11 of the stereoscreen 10 to form on plane 10 of this screen one or more auto-stereograms (by separately projecting with parallax several stereopairs similarly to aspectgram images). With the aid of separate actuators of the automatic corrector 5 with the sensor 6 for monitoring coordinates of spectators' eyes, the front raster 12 or several front independent rasters 12 disposed at the side of spectators are dynamically displaced in direction (g) to registration of each stereopair screen image vision area with the eyes of respective spectators. Therefore, every spectator can constantly view the clear stereoscopic effect from any aspect at displacement of the spectators in the stereoscopic image viewing sector. The stereoscopic system with a similar automatic correction of front rasters may be formed on the stereoscreen (in the plane of the screen 10 without projection and the raster 11 at the rear side of the screen) of a video monitor, a television set, a computer monitor, in the form of stereo photography, stereo illustration, a shop window or an advertisement billboard.

Like the embodiment of the stereoscopic projection system shown in Fig.1, the stereoscopic systems shown in Fig.4 with cat's-eye lenticular raster or mirror spherical stereoscreen shown in Fig.5 also simultaneously project a plurality of stereopair images from different projection points (projection aspects). The independent dynamic automatic correction is provided by similar automatic correctors 5 with sensors 6 (for defining the spatial location coordinates of the spectators' eyes) for registering every predetermined vision area of each stereopair image with respective eyes of a given spectator.

In the stereoscopic system shown in Figs.5 and 6, the monitor 11 forms the left image and the monitor 1r forms the right image of a stereopair. Projection telelenses 17, wide-angle lenses 18 and deflecting mirrors 19 project, onto a part 20 of the area of the stereoscreen 10, a part of the area of full-screen images of the stereopair in the form of stereogram screen images. The lenticular raster of the stereoscreen 10 (disposed on the rear side of the stereoscreen) forms full-screen images as an auto-stereogram. By the mobile front raster or several independently moving rasters of the stereoscreen 10 (disposed at the side of spectators) with the aid of separate actuators of the automatic corrector, the automatic corrector 5 provides dynamic independent registration of vision areas of the left and right full-screen images of the stereopair with the left and right eyes of every spectator, respectively, at displacement of this spectator. The sensors 6 determine spatial location coordinates of the spectators' eyes. The sensors are connected to the automatic corrector and generate control signals which are provided to the automatic corrector.

### Industrial Applicability

All of the stereo-projection systems in accordance with the invention may be produced on the commercial scale using conventional designs and production methods of projection and monitor systems for forming conventional and stereoscopic images. The stereoscreens in accordance with the invention may be fabricated by conventional methods for fabricating the lenticular raster and mirror spherical screens. The claimed automatic correction systems may be fabricated using conventional designs and production methods of similar automatic correction systems used in various fields for automatically tracking the objects. Therefore, the industrial applicability of the present invention is obvious. The stereoscopic systems may find wide application in cinemas and any television and computer systems in which the clear stereoscopic effect must be viewed at any viewing angle and at any mutual displacement of plurality of spectators. Such stereoscopic systems will ensure the most comfortable viewing, without viewing glasses, of stereoscopic images with optimal optical parameters at free positioning and mutual displacement of spectators, at collective simultaneous viewing of the same or different stereoscopic images on a common stereoscreen within a wide angle of view.

## Claims

1. A stereoscopic system for viewing stereogram images without viewing glasses, comprising an apparatus with a visualization stereoscreen for forming separately localized screen images of stereopairs, a number of stereopairs being equal to a number of spectators, the stereoscopic system further comprising, on the stereoscreen, a system for optically separating the left or right screen image of each predetermined stereopair, respectively, to a single stereo aspect for viewing by the left and right eye of one given spectator, respectively, said system ***characterized in that*** the apparatus for forming stereoscopic images is a stereo-projection system with a lenticular raster stereoscreen, or a cat's-eye screen, or a concave spherical stereoscreen, a number of stereo-projectors being equal to a number of spectators, projection lenses of each of the stereo-projectors are adapted to be displaced in parallel with the stereoscreen, and located and oriented in space so that the screen image of one stereopair projected by lenses of each stereo-projector is focused by the stereoscreen to a stereo aspect for viewing by one predetermined spectator, the stereo-projection system comprising an automatic corrector with actuators which are connected to the pairs of the projection lenses of the stereo-projectors for separately shifting the lenses in the direction of registration of one predetermined stereo aspect with appropriate eyes of a predetermined spectator, for which purpose the system comprises a sensor for separately determining the location coordinates of the eyes of every spectator relative to the stereo aspect for viewing the stereopair screen image, the sensor being connected to the automatic corrector and adapted to generate control signals which are provided to the automatic corrector.

2. The stereoscopic system as set forth in claim 1, wherein the stereoscreen is a translucent screen with three parallel layers of lenticular rasters formed by spherical positive microlenses, all microlenses in the rasters being arranged so that every three lenses, one from each raster layer, are located on a common optical axis perpendicular to the planes of the rasters at a distance between the lenses in accordance with the structure of a straight-drawing lens with the linear, optical magnification ratio equal to unity, all pairs of the projection lenses being mounted for through-projection behind the stereoscreen in the plane which is parallel to the plane of the stereoscreen and spaced from the stereoscreen at a distance which provides sharp focusing by the stereoscreen of every stereopair screen image to points of stereo aspects for clearly viewing the stereoscopic effect by every spectator.

3. The stereoscopic system as set forth in claim 1, wherein the stereoscreen comprises a mirror lenticular raster of cat's-eye type formed by cat's-eyes in the form of spherical microlenses having a mirror coating at the rear side, or the stereoscreen comprises a raster made by corner mirror reflectors, every pair of the projection lenses for magnifying projections on the stereoscreen being located closer to the head of a spectator, the lenses being directed at the stereoscreen for reflecting, by the stereoscreen, the right stereopair image projected by the lens at the right side of the head to the right eye of this spectator, and the left stereopair image projected by the lens at the left side of the head to the left eye of the spectator.

4. The stereoscopic system as set forth in claim 1, wherein the stereoscreen for reflecting the projection comprises a spherical concave mirror with the center of radius of curvature located at the side of a spectator, each given projection lens being continuously registered symmetrically to the appropriate eye of the spectator relative to the radius of curvature of the screen mirror which are in this plane of symmetry.

5. The stereoscopic system as set forth in any one of claims 1 to 4, wherein the stereo-projection system comprises a stereo-projector for forming images of a single common stereopair, comprising a pair of projection telelenses with a light-splitting system including mirror or prism elements for splitting projection beams projected from output pupils of the telelenses and directing the beams to input pupils of wide-angle or normal projection lenses for magnifying the stereopair images on the stereoscreen, the projection lenses for magnifying the images with the light-splitting elements being connected to an actuator of the automatic corrector for separately shifting the lenses in parallel with the plane of the stereoscreen to register predetermined stereo aspects with the eyes of a respective spectator.

6. A stereoscopic system for viewing stereogram images without viewing glasses, comprising an apparatus with a visualization stereoscreen for forming separately localized screen images of stereopairs, a number of the stereopairs being equal to a number of spectators, the system further comprising, on the stereoscreen, a system for optically separating of the left or right screen image of each predetermined stereopair, respectively, to a single stereo aspect for viewing by the left or right eye of one given spectator, respectively, ***characterized in that*** the apparatus for generating stereoscopic images comprises a monitor with a lenticular raster stereoscreen for forming auto-stereogram images, the stereoscreen of the monitor being formed as a directed transmission of a transparency on the screen, for forming stereopairs images displaceable in the screen plane and focused by the lenticular raster to predetermined separate stereo aspects for viewing each stereopair by a predetermined spectator at free displacement of the spectators, for which purpose the monitor comprises an automatic corrector for separately displacing, on the stereoscreen, the elements of the image in parallel with the lenticular raster so that each stereo aspect is optically registered, by the lenticular raster, with the eyes of a predetermined spectator, for which purpose the system comprises a sensor for separately determining the spatial location coordinates of the eyes of each spectator, the sensor being connected to the automatic corrector and adapted to generate control signals which are provided to the automatic corrector.

7. A stereoscopic system for viewing stereogram images without viewing glasses, comprising an apparatus with a visualization stereoscreen for forming separately localized screen images of stereopairs, a number of the stereopairs being equal to a number of spectators, the system further comprising, on the stereoscreen, a system for optically separating the left and right screen image of each predetermined stereopair, respectively, to a single stereo aspect for viewing by the left or right eye of a predetermined spectator, respectively, ***characterized in that*** the screens comprise separate lenticular rasters, the apparatus for forming stereoscopic images is monitor with a directed light emission of the screen or transmission of a transparency, or a stereo-projection system for forming, on the stereoscreen, fixed images of the stereopairs with a directed light emission of the each stereopair image to lenses of a predetermined separate lenticular raster of the stereoscreen, focusing by the lenses the screen images of any predetermined stereopair to a predetermined aspect for viewing the stereopair by a predetermined spectator at free displacement of the spectators, for which purpose the monitor or the projection system includes an automatic corrector for separately displacing distinct lenticular rasters in accordance with the location of the eyes of every spectator, the automatic corrector comprising actuators connected to each separate lenticular raster for separately displacing the raster along the screen relative to the screen stereopair images projected by this raster so that each appropriate stereo aspect is optically registered with the eyes of the appropriate spectator, for which purpose the system includes a sensor for separately determining the spatial location coordinates of each eye of every spectator, the sensor being connected to the automatic corrector and adapted to generate control signals which are provided to the automatic corrector.

8. A stereoscopic system for viewing stereogram images without viewing glasses, comprising an apparatus with a visualization stereoscreen for forming separately localized screen images of stereopairs, a number of the stereopairs being equal to a number of spectators, the system further comprising, on the stereoscreen, a system for optically separating the left and right screen image of each predetermined stereopair, respectively, to a single stereo aspect for viewing by the left and right eye of one predetermined spectator, respectively, ***characterized in that*** the apparatus for forming fixed stereo aspects of the stereopair screen images comprises a monitor with a directed light emission of the screen or transmission of a transparency with the lenticular raster for the number of formed stereopair images equal to the number of spectators, or the apparatus comprises a stereo-projection system with a lenticular raster stereoscreen and a number of stereo-projectors equal to the number of spectators, the projection lenses of each stereo-projector being located in space so that the screen image of one stereopair projected by lenses of each stereo-projector is focused by the stereoscreen to a stereo aspect for viewing by one predetermined spectator, in any embodiment of the apparatus for forming stereoscopic images chairs for spectators are mounted in a sector for viewing stereoscopic images, each of the chairs being movable within the area of spectator's displacement and registration of the spectator's eyes with one predetermined stereo aspect, the system further comprising an automatic corrector with actuators connected to each of the chairs for separately displacing the chair with the spectator to a position of optimal viewing of the stereoscopic effect by the spectator, for which purpose the system further comprises a sensor for separately determining the spatial location coordinates of each eye of every spectator, the sensor being connected to the automatic corrector and adapted to generate control signals which are provided to the automatic corrector.

9. The stereoscopic system as set forth in any one of claims 1 to 5, 7, 8, wherein the projection lenses for magnifying images on the stereoscreen are provided with individual optical correction elements such as curved mirrors or lenses for correcting geometrical errors, and/or half-tone, and/or color light filters for adjusting the brightness or chroma over the field of image.

10. The stereoscopic system as set forth in any one of claims 1 to 9, wherein the stereoscopic system is adapted for separate stereo-projection of parts of a common left and right image of each stereopair by separate stereo-projectors on different parts of the stereoscreen, and/or stereo-projection on the central part of the stereoscreen, and mono-projection of the left part of the left image on the left part of the screen, and the right part of the right image of the stereopair on the right part of the screen.
